# EUROPÄISCHE PATENTSCHRIFT

(11) **EP 1 540 985 B1**
(45) Veröffentlichungstag und Bekanntmachung des Hinweises auf die Patenterteilung: **15.02.2006**
(21) Anmeldenummer: 03797177.7
(22) Anmeldetag: 04.09.2003
(51) Int. Cl.: H04Q 7/38

(54) **VERFAHREN ZUR DURCHFÜHRUNG EINER ÜBERGABEPROZEDUR IN EINEM FUNKKOMMUNIKATIONSSYSTEM FÜR EINE PAKETVERMITTELTE VERBINDUNG UND DAFÜR ANGEPASSTES FUNKKOMMUNIKATIONSSYSTEM**
METHOD FOR CARRYING OUT A TRANSFER PROCEDURE IN A RADIO COMMUNICATION SYSTEM FOR A PACKET-SWITCHING CONNECTION AND RADIO COMMUNICATION SYSTEM SUITABLE FOR THE SAME
PROCEDE DE REALISATION D'UNE PROCEDURE DE TRANSFERT DANS UN SYSTEME DE COMMUNICATION RADIO DESTINEE A UNE CONNEXION A COMMUTATION PAR PAQUETS ET SYSTEME DE COMMUNICATION RADIO ADAPTE A CET EFFET

(30) Priorität: 17.09.2002 DE 10243142
(43) Veröffentlichungstag der Anmeldung: 15.06.2005
(73) Patentinhaber: SIEMENS AKTIENGESELLSCHAFT, 80333 München (DE)
(72) Erfinder: KURZMANN, Bernd, A-1030 Wien (AT); PIEROTH, Mathias, 82205 Gilching (DE)
(86) Internationale Anmeldenummer: PCT/DE2003/002943
(87) Internationale Veröffentlichungsnummer: WO 2004/028189

(56) Entgegenhaltungen:
- WO-A-00/79808
- US-A- 5 471 644

## Beschreibung

Funkkommunikationssysteme dienen der Übertragung von Informationen, Sprache oder Daten, mit Hilfe von elektromagnetischen Wellen über eine Funkschnittstelle zwischen einer sendenden und einer empfangenden Funkstation. Ein Beispiel für ein Funkkommunikationssystem ist das bekannte GSM-Mobilfunknetz, sowie dessen Weiterentwicklung GPRS, dessen Architektur, zum Beispiel in B. Walke, "Mobilfunknetze und ihre Protokolle", Band 1, Teubner-Verlag Stuttgart, 1998, Seite 139 bis 151 und Seite 295 bis 311, beschrieben ist. Dabei ist zur Übertragung eines Teilnehmersignals jeweils ein durch einen schmalbandigen Frequenzbereich und einen Zeitschlitz gebildeter Kanal vorgesehen.

Bei der paketvermittelten Datenübertragung erfolgt die Datenübertragung für mehrere Teilnehmer im Zeitmultiplex über ein-und denselben Kanal. Jeder Teilnehmer kann dabei auch mehrere Kanäle gleichzeitig belegen.

Zur Paketdatenvermittlung umfasst ein Funkkommunikationssystem, zum Beispiel ein GSM-Mobilfunknetz mit GPRS, eine Vielzahl von Paketdatendienstknoten (Serving GPRS Support Note, SGSN), die untereinander vernetzt sind und die den Zugang zu einem Festdatennetz herstellen. Die Paketdatendienstknoten sind ferner mit Basisstationssteuerungen (BSC) verbunden. Jede Basisstationssteuerung ermöglicht wiederum eine Verbindung zu mindestens einer Basisstation (BTS) und nimmt die Verwaltung der funktechnischen Ressourcen der angeschlossenen Basisstationen vor. Eine solche Basisstation ist eine Sende/Empfangseinheit, die über eine Funkschnittstelle eine Nachrichtenverbindung zu Mobilstationen aufbauen kann.

Die Zuweisung der einzelnen Teilnehmer auf einen Kanal erfolgt über eine Paketdatensteuereinheit, die jeweils in einer der Basisstationssteuerungen vorgesehen ist.

Ein Gebiet, das von einem Funkkommunikationssystem abgedeckt wird, wird in einzelne Funkzonen, die auch als Zellen bezeichnet werden, aufgeteilt. Eine Zelle wird dabei von einer der Basisstationen bedient, über die Funkverbindungen von Mobilstationen, die sich in dieser Zelle aufhalten, aufgebaut werden. Ferner wird das Gebiet, das von einem Funkkommunikationssystem abgedeckt wird, in Aufenthaltsbereiche, auch Routing-Area genannt, aufgeteilt. Ein Aufenthaltsbereich umfasst dabei mehrere Funkzellen. Dem Gebiet, das von einem Paketdatendienstknoten (SGSN) gesteuert wird, können mehrere Aufenthaltsbereiche zugewiesen werden. Die Aufenthaltsbereiche werden von einer Mobilitätsverwaltung, die vielfach auch als Mobility Management bezeichnet wird und an dem Paketdienstknoten angesiedelt ist, verwaltet.

Bewegt sich eine Mobilstation aus dem Gebiet einer Zelle in eine andere Zelle, so erfolgt bei laufender Funkverbindung eine automatische Übergabeprozedur, die auch Handover genannt wird. Dadurch wird eine aktive Funkverbindung auch über Zellgrenzen hinweg aufrechterhalten. Bei der Übergabeprozedur wird die Funkverbindung, die von der Mobilstation über eine erste Sende/Empfangseinheit aufgebaut ist, auf eine zweite Sende/Empfangseinheit umgeschaltet.

Bewegt sich eine Mobilstation aus dem Gebiet eines Aufenthaltsbereichs in einen anderen Aufenthaltsbereich, so muss eine Aktualisierung des Aufenthaltsbereichs, die auch als Routing-Area Update bezeichnet wird, vorgenommen werden. Der Mobilstation wird im jeweiligen Aufenthaltsbereich eine Kennung zugewiesen, die im GPRS-Sytem unter der Bezeichnung Temporary Logical Link Identifier (TLLI) bekannt ist. Dabei muss der Mobilstation in dem neuen Aufenthaltsbereich eine neue Kennung TLLI zugewiesen werden.

Im GPRS-System, Release 5 (siehe 3GPP TS23.060, Seite 32 bis 110) ist vorgesehen, dass die Notwendigkeit für eine Übergabeprozedur für paketvermittelte Daten von der Mobilstation festgestellt wird. Soll eine Übergabeprozedur für eine Mobilstation durchgeführt werden, so meldet sich die Mobilstation bei der Basisstation der neuen Zelle an. Findet gleichzeitig ein Wechsel des Aufenthaltsbereichs statt, so muss zunächst eine Prozedur zum Aufenthaltsbereichswechsel (Routing-Area Update) durchgeführt werden, bei der der Mobilstation eine neue Kennung zugewiesen wird. Erst nach erfolgreicher Beendigung der Prozedur zum Aufenthaltsbereichswechsel kann eine Wiederaufnahme des Datenaustauschs zwischen der neuen Sende/Empfangseinheit und der Mobilstation erfolgen. Während der Prozedur zum Aufenthaltsbereichswechsel ist der Datenaustausch unterbrochen. Diese Unterbrechung wird bei verschiedenen Anwendungen, wie zum Beispiel bei Streaming-Anwendungen oder bei conversational services als störend empfunden.

Der Erfindung liegt daher das Problem zugrunde, ein Verfahren und ein dafür angepaßtes Funkkommunikationssystem zur Durchführung einer Übergabeprozedur für eine paketvermittelte Verbindung anzugeben, bei der die Dauer einer Unterbrechung des Datenaustauschs reduziert wird.

Das Dokument WO 00 79808 A offenbart ein Verfahren zum Verringern der Verzögerung beim Weiterreichen von Mobilstationen in einem GPRS Netzwerk, wobei Systeminformationen der Zielzelle übertragen werden und ein vorrübergehender Blockfluss in Auf- und Abwärtsrichtung in der Zielzelle errichtet wird.

Dieses Problem wird erfindungsgemäß gelöst durch ein Verfahren gemäß Anspruch 1 und ein Funkkommunikationssystem nach Ansspruch 11. Weitere Ausgestaltungen der Erfindung gehen aus den Unteransprüchen hervor.

Zwischen einer Mobilstation und einer ersten Sende/Empfangseinheit ist eine paketvermittelte Verbindung eingerichtet. Dabei ist die Mobilstation einer ersten Zelle, die von einer ersten Sende-/Empfangseinheit bedient wird, und einem ersten Aufenthaltsbereich zugeordnet. Bewegt sich nun die Mobilstation in eine zweite Zelle, die von einer zweiten Sende/Empfangseinheit bedient wird, und in einen zweiten Aufent-haltsbereich, so wird der Verbindung eine Aufenthaltsbereichswechselkennung zugewiesen. Nachfolgend wird eine Übergabeprozedur der paketvermittelten Verbindung von der ersten Zelle in die zweite Zelle durchgeführt. Nach der Übergabeprozedur wird ein Datenaustausch über die paketvermittelte Verbindung wieder aufgenommen. Nach der Wiederaufnahme des Datenaustauschs wird eine Prozedur zum Aufenthaltsbereichswechsel durchgeführt.

Da in dem erfindungsgemäßen Verfahren die Prozedur zum Aufenthaltsbereichswechsel (Routing-Area Update) erst durchgeführt wird, nachdem der Datenaustausch nach der Übergabeprozedur wieder aufgenommen wurde, läuft die Prozedur zum Aufenthaltsbereichswechsel parallel zum Datenaustausch. Daher wird die Dauer einer Unterbrechung des Datenaustauschs bei der Übergabeprozedur deutlich reduziert. Da der Verbindung eine Aufenthaltsbereichswechselkennung zugewiesen wird, die im Funkkommunikationssystem verfügbar ist, ist es auch vor der Durchführung der Prozedur zum Aufenthaltsbereichswechsel möglich, der Mobilstation, die nun in der zweiten Zelle und dem zweiten Aufenthaltsbereich anwesend ist, Daten zu schicken.

Vorzugsweise werden vor der Durchführung der Übergabeprozedur von der ersten Zelle in die zweite Zelle in der zweiten Zelle Funkressourcen für die paketvermittelte Verbindung reserviert. Dadurch kann das Umschalten der paketvermittelten Verbindung von der ersten Zelle auf die zweite Zelle sehr schnell erfolgen, so dass eine Unterbrechung des Datenaustausches praktisch vermieden wird.

Vorzugsweise werden Datenpakete für die Mobilstation, die bei der ersten Sende/Empfangseinheit ankommen, dupliziert, sobald der Verbindung die Aufenthaltsbereichswechselkennung zugewiesen ist, das heisst, sobald feststeht, dass ein Wechsel von der ersten Zelle in die zweite Zelle und dem ersten Aufenthaltsbereich in den zweiten Aufenthaltsbereich vorgesehen ist. Die duplizierten Datenpakete werden in der zweiten Sende/Empfangseinheit bereitgestellt, so dass sowohl in der ersten Sende/Empfangseinheit, als auch in der zweiten Sende/Empfangseinheit die identischen Datenpakete vorliegen. Das Duplizieren der Datenpakete kann in der ersten Sende/Empfangseinheit erfolgen. In diesem Fall müssen die duplizierten Datenpakete über einen zugeordneten Paketdatendienstknoten SGSN zur zweiten Sende/Empfangseinheit übermittelt werden. Alternativ kann das Duplizieren der Datenpakete in dem zugeordneten Paketdatendienstknoten SGSN erfolgen, von dem aus die Datenpakete zur ersten Sende/Empfangseinheit und zur zweiten Sende/Empfangseinheit übermittelt werden. Durch das Duplizieren der Datenpakete während der Zeit für die Übergabeprozedur von der ersten Zelle in die zweite Zelle wird sichergestellt, dass in diesem Zeitraum ankommende Datenpakete die Mobilstation erreichen, unabhängig davon, über welche der Sende/Empfangseinheiten die Verbindung gerade geschaltet ist.

Es liegt im Rahmen der Erfindung, dass nach der Übergabeprozedur zumindest für eine Übergangszeit dieselbe Datenkompression und dieselbe Datenverschlüsselung wie vor der Übergabeprozedur verwendet werden. Das hat den Vorteil, dass die Übergabeprozedur unterhalb der Schichten abläuft, die für Datenkompression und Datenverschlüsselung zuständig sind. Diese Schichten, üblicherweise LLC (Logical Link Control) und SNDCP (Sub-Network Dependant Convergence Protocol), und die dazugehörigen Protokolle können daher unverändert weiterverwendet werden. Ausserdem wird Signalisierungsaufwand für eine Rekonfiguration der Verschlüsselung und der Kompression vermieden.

Es liegt im Rahmen der Erfindung, dass der Mobilstation in dem ersten Aufenthaltsbereich eine erste Kennung zugewiesen wird, und in dem zweiten Aufenthaltsbereich eine zweite Kennung. Die erste Kennung und die zweite Kennung können als Temporary Logical Link Identifier TLLI ausgebildet werden. Für den Wechsel der Mobilstation in die zweite Zelle wird der Mobilstation eine Übergangskennung zugewiesen, die verwendet wird, bis die Prozedur zum Aufenthaltsbereichswechsel durchgeführt worden ist. Über diese Übergangskennung kann die Mobilstation in der zweiten Zelle erreicht werden, obwohl die Prozedur zum Aufenthaltsbereichswechsel noch nicht durchgeführt wurde. Die Übergangskennung kann der Mobilstation von einem Administrator, zum Beispiel dem Netzbetreiber, zugewiesen werden. Alternativ kann die Übergangskennung von dem zugehörigen Paketdatendienstknoten SGSN zugewiesen werden.

Die Übergangskennung kann aus einer Menge dafür reservierter Kennungen ausgewählt werden. Das können beispielsweise bestimmte TLLI-Kennungen, die zum Beispiel als Handover-TLLI bezeichnet werden können, sein. Diese Kennungen werden zum Beispiel vom Administrator vorgegeben.

Alternativ wird die Übergangskennung aus der ersten Kennung und einer Ergänzungskennung, zum Beispiel einem Flag, zusammengesetzt. Die Ergänzungskennung wird einfach an die erste Kennung angehängt oder dieser vorangestellt. Als Ergänzungskennung kann beispielsweise die Aufenthaltsbereichswechselkennung verwendet werden.

Da in dem Funkkommunikationsnetz auf Grunde der zugewiesenen Aufenthaltsbereichswechselkennung bekannt ist, dass sich die Mobilstation mit einer fremden Kennung im zweiten Aufenthaltsbereich aufhält, ist auf diese Weise gewährleistet, dass für die Mobilstation bestimmte Daten, die Mobilstation erreichen. Als fremde Kennung wird in diesem Zusammenhang eine Kennung bezeichnet, die nicht dem zweiten Aufenthaltsbereich zugeordnet ist, oder alternativ eine Kennung, die zwar dem zweiten Aufenthaltsbereich zugeordnet ist, für die aber noch kein Eintrag in der Mobilitätsverwaltung gemacht wurde, wie er einem ordnungsgemäß angemeldeten Teilnehmer entspricht, da die Prozedur zum Aufenthaltsbereichswechsel noch nicht durchgeführt wurde.

Es liegt im Rahmen der Erfindung , zum Abschluss der Übergabeprozedur ein Datenpaket von der Mobilstation an die zweite Sende/Empfangseinheit zu senden. Anhand des Empfangs dieses Datenpaketes erkennt die zweite Sende/Empfangseinheit, dass die Übergabeprozedur abgeschlossen werden kann und nimmt den Sendebetrieb zur Mobilstation auf. Das Datenpaket das von der Mobilstation an die zweite Sende/Empfangseinheit gesendet wird, kann, falls keine von der Mobilstation zur Sende/Empfangseinheit zu sendenden Daten vorliegen, eigens zu diesem Zweck generiert werden.

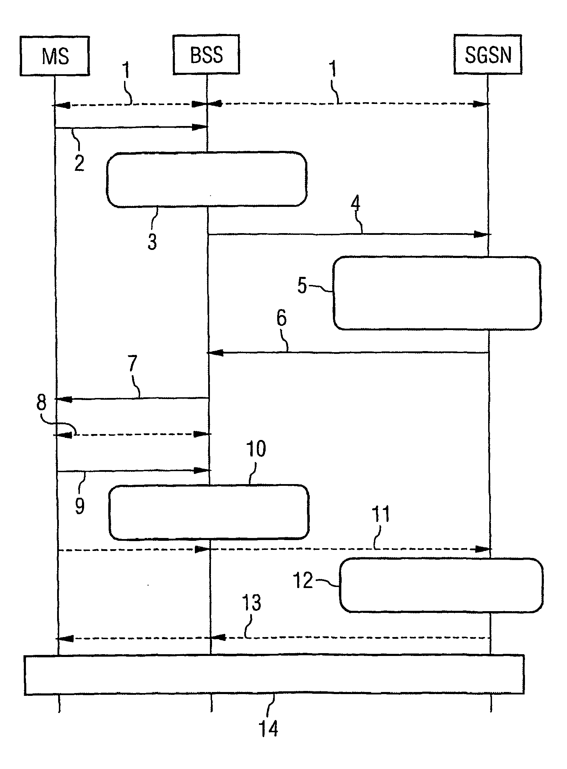

Im Folgenden wird die Erfindung anhand eines Beispiels, das in der Figur dargestellt ist, näher erläutert.

In der Figur ist schematisch der Nachrichtenaustausch bei einem Zell- und Aufenthaltsbereichswechsel zwischen einer Mobilstation, einem Basisstationssystem und einem Paketdatendienstknoten dargestellt.

In einer ersten Zelle, die von einer ersten Sende-/Empfangseinheit bedient wird, ist eine paketvermittelte Verbindung 1 von einer Mobilstation MS über ein Basisstationssystem BSS zu einem Paketdatendienstknoten SGSN aufgebaut. Dabei werden Daten sowohl in Aufwärtsrichtung (Uplink) von der Mobilstation MS zum Basisstationssystem BSS als auch in Abwärtsrichtung (Downlink) vom Basisstationssystem BSS zur Mobilstation MS übertragen. Ferner werden Messberichte 2, aus denen die Qualität der Verbindung zwischen der Mobilstation MS und dem Basisstationssystem BSS abgeleitet werden kann, zwischen der Mobilstation MS und dem Basisstationssystem BSS gesendet. Anhand der Messberichte 2 wird im Basisstationssystem BSS die Notwendigkeit für einen Wechsel von der ersten Zelle in eine zweite Zelle, die von einer zweiten Sende-/Empfangseinheit und von einem ersten Aufenthaltsbereich in einen zweiten Aufenthaltsbereich erkannt.

Daraufhin wird im Basisstationssystem BSS eine Vorbereitung 3 für eine Übergabeprozedur gestartet. Dazu wird in der zweiten Zelle eine Reservierung von Funkressourcen vorgenommen. Dazu gehört die Reservierung von Übertragungskapazität auf Aufwärts- und Abwärtskanälen in der zweiten Zelle. Ferner werden virtuelle Verbindungen, sogenannte Network Service Virtual Connections, für die Aufwärtsrichtung in der zweiten Zelle reserviert. Ferner wird der paketvermittelten Verbindung eine Aufenthaltsbereichswechselkennung, zum Beispiel Routing-Area Change, zugewiesen.

Anschließend wird eine Anforderung 4 für eine Übergabeprozedur an den Paketdatendienstknoten SGSN gerichtet. Die Anforderung 4 enthält als Parameter unter Anderem die Aufenthaltsbereichswechselkennung Routing Area Change, eine Kennung der zweiten Zelle, in die die Übergabeprozedur führen soll, sowie Informationen über die Eigenschaften der Paketdaten, die über die paketvermittelte Verbindung übertragen werden. Derartige Informationen sind zum Beispiel sogenannte Packet Flow Contexts, aus denen Priorität und Dienstgüte der betroffenen Paketdaten hervorgehen.

Im Paketdatendienstknoten SGSN wird daraufhin die paketvermittelte Verbindung in einen speziellen Modus 5, der zum Beispiel Übergabeprozedur mit verzögerter Aufenthaltsbereichsaktualisierung oder "Handover with delayed Routing-Area Update" bezeichnet wird, versetzt. Gleichzeitig werden für die Abwärtsrichtung virtuelle Verbindungen, zum Beispiel Network Service Virtual Connections, in der zweiten Zelle reserviert. Ferner wird sichergestellt, dass ankommende Datenpakete dupliziert und an die erste Basisstation und die zweite Basisstation weitergeleitet werden.

Nachfolgend sendet der Paketdatendienstknoten SGSN an das Basisstationssystem BSS eine Anweisung 6 für eine Übergabeprozedur. Als Argument wird die Aufenthaltsbereichswechselkennung in Form des speziellen Zustands Übergabeprozedur mit verzögerter Aufenthaltsbereichsaktualisierung beziehungsweise Handover with Delayed Routing-Area Update gesendet. Die Anweisung 6 umfasst darüber hinaus eine Übergangskennung HO-TLLI, die der Mobilstation von dem Paketdatendienstknoten SGSN zugewiesen wird. Die Anweisung 6 enthält keine Informationen zur Rekonfiguration von höheren Schichten. In dem Basisstationssystem wird die Anweisung 6 ergänzt um Parameter der reservierten Funkressourcen, wodurch eine Anweisung 7 gebildet wird, die von dem Basisstationssystem BSS zur Mobilstation MS übermittelt wird.

Die Mobilstation meldet sich in einer Anmeldeprozedur 8 mit der Übergangskennung HO-TLLI in der zweiten Zelle an und wird vom Basisstationssystem BSS registriert. Nachfolgend wird die Übergabeprozedur beendet. Die Mobilstation MS sendet dem Basisstationssystem BSS eine Nachricht 9, die das Ende der Übergabeprozedur signalisiert. Diese Nachricht heißt beispielsweise HO-Complete. Ferner nimmt die Mobilstation MS einen Datentransfer 11 mit dem Basisstationssystem BSS auf und sendet die Mobilstation MS ein Datenpaket in Aufwärtsrichtung zum Basisstationssystem und zum Paketdatendienstknoten SGSN. Die Sendung der Nachricht 9 HO Complete und der Datentransfer 11 des Datenpakets kann gleichzeitig oder nacheinander erfolgen. Dabei ist es unerheblich, ob erst die Nachricht 9 gesendet wird oder erst der Datentransfer 11 erfolgt. Die Nachricht 9 bewirkt in dem Basisstationssystem BSS eine Aktion 10, bei der veranlasst wird, dass im Basisstationssystem BSS gespeicherte Daten für die Abwärtsrichtung vom Basisstationssystem BSS zur Mobilstation MS gesendet werden. Ausserdem gibt das Basisstationssystem BSS Funkressourcen in der ersten Zelle frei.

Der Empfang des Datenpakets, das in dem Datentransfer 11 gesendet wird, im Paketdatendienstknoten SGSN bewirkt eine Aktion 12, bei der bewirkt wird, dass die Duplizierung der Datenpakete beendet wird. Ferner werden die Funkressourcen für die erste Zelle freigegeben. Ein Datentransfer 13 in Abwärtsrichtung läuft danach ausschließlich vom Paketdatendienstknoten SGSN über die zweite Sende/Empfangseinheit zur Mobilstation MS.

Nachdem der Datenaustausch 11,13 zwischen der Mobilstation MS und dem Basisstationssystem BSS und dem Paketdatendienstknoten SGSN wieder aufgenommen wurde, wird eine Prozedur 14 zur Aktualisierung des Aufenthaltsbereichs (Routing-Area Update) in bekannter Weise durchgeführt.

In dem beschriebenen Beispiel wurde angenommen, dass die erste Zelle und die zweite Zelle von Basisstationen bedient werden, die zu ein- und demselben Basisstationssystem BSS gehören. Ist dies nicht der Fall, so erfolgt die Vorbereitung 3 der Übergabeprozedur und die Beendigung 9 der Übergabeprozedur jeweils unter Einbeziehung des Paketdatendienstknotens SGSN.

Weiterhin wurde angenommen, dass eine Duplizierung der Datenpakete in Abwärtsrichtung im Paketdatendienstknoten SGSN stattfindet. Alternativ ist auch eine Duplizierung im Basisstationssystem BSS möglich. Durch die Duplizierung wird sichergestellt, dass in Abwärtsrichtung zu sendende Datenpakete während der Übergabeprozedur sowohl in der ersten Sende-/Empfangseinheit als auch in der zweiten Sende-/Empfangseinheit bereitgehalten werden.

## Patentansprüche

1. Verfahren zur Durchführung einer Übergabeprozedur in einem Funkkommunikationssystem,
- bei dem von einer Mobilstation über eine erste Sende/Empfangseinheit eine paketvermittelte Verbindung eingerichtet ist, wobei die Mobilstation einer ersten Zelle und einem ersten Aufenthaltsbereich zugeordnet ist,
- bei dem, falls die Mobilstation in eine zweite Zelle, die von einer zweiten Sende/Empfangseinheit bedient wird, und in einen zweiten Aufenthaltsbereich wechselt, der Verbindung eine Aufenthaltsbereichswechselkennung zugewiesen wird,
- bei dem eine Übergabeprozedur der paketvermittelten Verbindung von der ersten Zelle in die zweite Zelle durchgeführt wird,
- bei dem nach der Übergabeprozedur ein Datenaustausch über die paketvermittelte Verbindung wieder aufgenommen wird,
- bei dem nach der Wiederaufnahme des Datenaustauschs eine Prozedur zum Aufenthaltsbereichswechsel durchgeführt wird.

2. Verfahren nach Anspruch 1,
- bei dem vor der Durchführung der Übergabeprozedur von der ersten Zelle in die zweite Zelle in der zweiten Zelle Funkressourcen für die paketvermittelte Verbindung reserviert werden.

3. Verfahren nach Anspruch 1 oder 2,
- bei dem, sobald der Verbindung die Aufenthaltsbereichswechselkennung zugewiesen ist, Datenpakete für die Mobilstation dupliziert werden und sowohl in der ersten Sende/Empfangseinheit als auch in der zweiten Sende/Empfangseinheit bereitgestellt werden.

4. Verfahren nach einem der Ansprüche 1 bis 3,
- bei dem nach der Übergabeprozedur zumindest für eine Übergangszeit dieselbe Datenkompression und dieselbe Datenverschlüsselung wie vor der Übergabeprozedur verwendet werden.

5. Verfahren nach einem der Ansprüche 1 bis 4,
- bei dem der Mobilstation in dem ersten Aufenthaltsbereich eine erste Kennung zugewiesen wird,
- bei dem der Mobilstation für den Wechsel in die zweite Zelle eine Übergangskennung zugewiesen wird, die verwendet wird, bis die Prozedur zum Aufenthaltsbereichswechsel durchgeführt wird,
- bei dem der Mobilstation in dem zweiten Aufenthaltsbereich eine zweite Kennung zugewiesen wird.

6. Verfahren nach Anspruch 5,
bei dem die Übergangskennung aus einer Menge dafür reservierter Kennungen ausgewählt wird.

7. Verfahren nach Anspruch 5,
bei dem die Übergangskennung aus der ersten Kennung und einer Ergänzungskennung zusammengesetzt wird.

8. Verfahren nach einem der Ansprüche 5 bis 7,
bei dem die Übergangskennung von einem Administrator zugewiesen wird.

9. Verfahren nach einem der Ansprüche 5 bis 7,
bei dem die Übergangskennung von einem zugeordneten Paketdatendienstknoten des Funkkommunikationssystems zugewiesen wird.

10. Verfahren nach einem der Ansprüche 1 bis 9,
- bei dem zum Abschluss der Übergabeprozedur ein Datenpaket von der Mobilstation in die zweite Sende/Empfangseinheit gesendet wird,
- bei dem nach Empfang des einen Datenpakets die zweite Sende/Empfangseinheit den Sendebetrieb zur Mobilstation aufnimmt.

11. Funkkommunikationssystem, das derart ausgestaltet ist, dass ein Verfahren nach einem der Ansprüche 1 bis 10 darauf abläuft.

## Claims

1. Method for performing a handover procedure in a radio communication system,
- wherein a packet-switched connection is set up from a mobile station via a first transceiver unit, with the mobile station being assigned to a first cell and a first routing area,
- wherein, if the mobile station moves into a second cell which is served by a second transceiver unit, and into a second routing area, the connection is assigned a routing area update identifier,
- wherein a handover procedure of the packet-switched connection from the first cell into the second cell is performed,
- wherein, following the handover procedure, an exchange of data via the packet-switched connection is resumed,
- wherein a procedure for routing area update is executed following the resumption of the exchange of data.

2. Method according to claim 1,
- wherein, before the handover procedure from the first cell into the second cell is performed, radio resources for the packet-switched connection are reserved in the second cell.

3. Method according to claim 1 or 2,
- wherein, as soon as the connection is assigned the routing area update identifier, data packets are duplicated for the mobile station and are provided both in the first transceiver unit and in the second transceiver unit.

4. Method according to one of the claims 1 to 3,
- wherein, following the handover procedure, at least for a transitional period, the same data compression and the same data encryption are used as before the handover procedure.

5. Method according to one of the claims 1 to 4,
- wherein the mobile station in the first routing area is assigned a first identifier,
- wherein the mobile station is assigned a temporary handover identifier for the switch to the second cell, which temporary handover identifier is used until the procedure for routing area update is performed,
- wherein the mobile station is assigned a second identifier in the second routing area.

6. Method according to claim 5,
wherein the temporary handover identifier is selected from a set of identifiers reserved for that purpose.

7. Method according to claim 5,
wherein the temporary handover identifier is made up of the first identifier and a supplementary identifier.

8. Method according to one of the claims 5 to 7,
wherein the temporary handover identifier is assigned by an administrator.

9. Method according to one of the claims 5 to 7,
wherein the temporary handover identifier is assigned by an associated serving GPRS support node of the radio communication system.

10. Method according to one of the claims 1 to 9,
- wherein, to complete the handover procedure, a data packet is sent from the mobile station to the second transceiver unit,
- wherein, following reception of the one data packet the second transceiver unit initiates transmission operation to the mobile station.

11. Radio communication system which is embodied such that a method according to one of the claims 1 to 10 is performed thereon.

## Revendications

1. Procédé pour réaliser une procédure de transfert dans un système de radiocommunication, dans lequel
- une connexion à commutation par paquets est mise en place par une station mobile par l'intermédiaire d'une première unité émettrice / réceptrice, la station mobile étant affectée à une première cellule et à une première zone de localisation,
- si la station mobile passe à une deuxième cellule qui est desservie par une deuxième unité émettrice / réceptrice et dans une deuxième zone de localisation, il y a assignation d'un identificateur de changement de zone de localisation à la connexion,
- il y a exécution d'une procédure de transfert de la connexion à commutation par paquets de la première cellule à la deuxième cellule,
- après la procédure de transfert, il y a reprise d'un échange de données par l'intermédiaire de la connexion à commutation par paquets,
- après la reprise de l'échange de données, il y a exécution d'une procédure de changement de zone de localisation.

2. Procédé selon la revendication 1,
- dans lequel il y a réservation, dans la deuxième cellule, de ressources radio pour la connexion à commutation par paquets avant l'exécution de la procédure de transfert de la première cellule à la deuxième cellule.

3. Procédé selon la revendication 1 ou 2,
- dans lequel, dès que l'identificateur de changement de zone de localisation est assigné à la connexion, des paquets de données pour la station mobile sont doublés et sont mis à disposition aussi bien dans la première unité émettrice /réceptrice que dans la deuxième unité émettrice /réceptrice.

4. Procédé selon l'une des revendications 1 à 3,
- dans lequel il y a utilisation, après la procédure de transfert, de la même compression de données et du même cryptage de données qu'avant la procédure de transfert, du moins pour une période de transition.

5. Procédé selon l'une des revendications 1 à 4,
- dans lequel il y a assignation d'un premier identificateur à la station mobile dans la première zone de localisation,
- dans lequel il y a assignation d'un identificateur de transition à la station mobile pour le passage à la deuxième cellule, lequel identificateur est utilisé jusqu'à l'exécution de la procédure de changement de zone de localisation,
- dans lequel il y a assignation d'un deuxième identificateur à la station mobile dans la deuxième zone de localisation.

6. Procédé selon la revendication 5,
dans lequel il y a sélection de l'identificateur de transition dans un ensemble d'identificateurs réservés à cet effet.

7. Procédé selon la revendication 5,
dans lequel l'identificateur de transition se compose du premier identificateur et d'un identificateur complémentaire.

8. Procédé selon l'une des revendications 5 à 7,
dans lequel l'identificateur de transition est assigné par un administrateur.

9. Procédé selon l'une des revendications 5 à 7,
dans lequel l'identificateur de transition est assigné par un noeud de service de données par paquets associé du système de radiocommunication.

10. Procédé selon l'une des revendications 1 à 9,
- dans lequel, à la fin de la procédure de transfert, un paquet de données est envoyé de la station mobile à la deuxième unité émettrice / réceptrice;
- dans lequel après la réception de l'un paquet de données la deuxième unité émettrice / réceptrice commence le mode d'émission vers la station mobile.

11. Système de radiocommunication, configuré de manière telle qu'un procédé selon l'une des revendications 1 à 10 se déroule dessus.
